# EUROPEAN PATENT SPECIFICATION

(11) **EP 1 186 511 B1**
(45) Date of publication and mention of the grant of the patent: **15.04.2009**
(21) Application number: 01850154.4
(22) Date of filing: 10.09.2001
(51) Int. Cl.: B62B 5/04

(54) **Brake for a hand truck**
Bremse eines Handwagens
Frein d'une charette à bras

(30) Priority: 11.09.2000 SE 0003229
(43) Date of publication of application: 13.03.2002
(73) Proprietor: BT Industries, S-59581 Mjölby (SE)
(72) Inventor: Kronewitter, Gerhard, 5700 Zell am Zee (AT)
(74) Representative: Berglund, Erik Wilhelm

(56) References cited:
- FR-A- 2 721 571
- GB-A- 713 510
- US-A- 5 927 441

## Description

The invention is concerned with an arrangement at the brake of a hand truck or the like including a tiller with a handle and a first lever pivotally journalled on a first axle in the handle, said lever being via a wire or the like connected to a brake means. Movement of the first lever transfer the brake means between a braking and a released position, the first lever is by a spring means biased towards a release position.

### Prior art

Hand trucks intended for transportation of for instance load pallets, with a tiller as defined in the preamble of claim 1, are today common on the market. In some cases they are provided with a brake. These brakes normally function somewhat like a bicycle brake, that is a lever (brake lever) is via a wire or the like connected to a pair of brake shoes that on activation are pressed against a wheel. Normally the brake shoes are spring biased towards a release position.

This solution means that when the brake lever is released the brake is released by the spring pretension and there is thus no parking brake function. In order to achieve a parking brake there are solutions where a pin or the like is journalled in the brake lever. The pin can be turned into one or several recesses arranged in a protrusion on the lever thereby preventing the brake lever from returning to the release position. When it is desired to release the brake the pin is pushed aside with a finger and the brake lever resume its release position.

From US-A-5,927,441, a brake is known for a wheel provided support carriage for in particularly elderly when walking. A manual brake actuation lever is provided for the user and the movement of this is transferred to an intermediate hidden lever arm that in two different ways, depending on the direction of movement of the manual control lever, actuates the brake. When the control lever is pulled upwards the brake is activated and when the control lever is lowered the brake is not only activated but also locked providing a parking brake.

These parking brake solutions may be somewhat difficult to handle, in particular with gloves. Furthermore they give the hand truck a comparatively unsophisticated appearance.

### Object of the invention

The object of the invention is to achieve a brake device for a hand truck or the like with a parking brake function that result in a simple handling and at the same time an aesthetically appealing look without being technically too complicated.

### Brief description of the invention

The objects of the invention are achieved with a tiller as defined in claim 1, where a second lever is pivotally journalled in the handle on a second axle essentially parallel to the first axle. The second lever is moveable between the braking and the release positions and the first and second levers include respective mechanical locking parts arranged to cooperate with each other so that the locking parts are free from each other in the release position of the second lever while the locking parts cooperate, when the first and second levers, are in the braking position, in such a way that the spring force of the spring means is overcome and the first lever is locked in its braking position.

Since the brake lever is completed with a second lever for the parking brake function with cooperating locking parts the brake lever can be actuated in the normal way while it is locked in a braking position by the activation of the parking brake lever. The parking brake is then easily released by simply returning the parking brake lever to the release position.

Claim 2 defines a geometrically advantageous solution enabling an arrangement requiring a minimum of space with optimal movement paths of the levers.

Claim 3 defines an advantageous embodiment that provides good function with simple shapes for the levers, while claim 4 provides a solution where the cable elegantly can be protected.

The arrangement according to claim 5 enables the use of a third lever for the release of the parking brake, while the claim 6 defines a suitable arrangement where an already existing lever is arranged and used in an advantageous way.

Further features and advantages of the invention are apparent from the following description of a preferred embodiment with a reference to the enclosed drawings.

### Figures

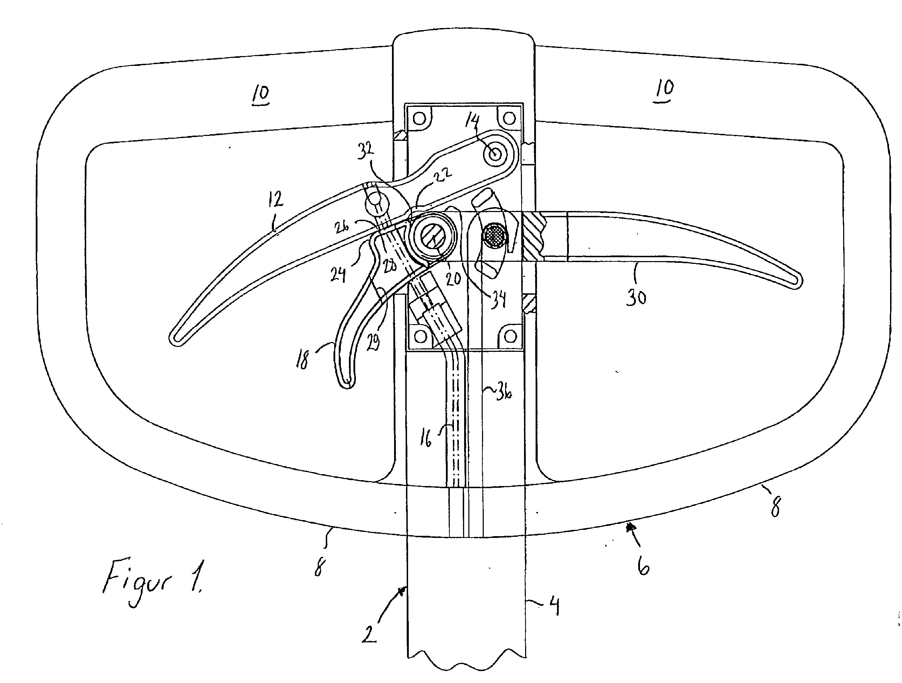

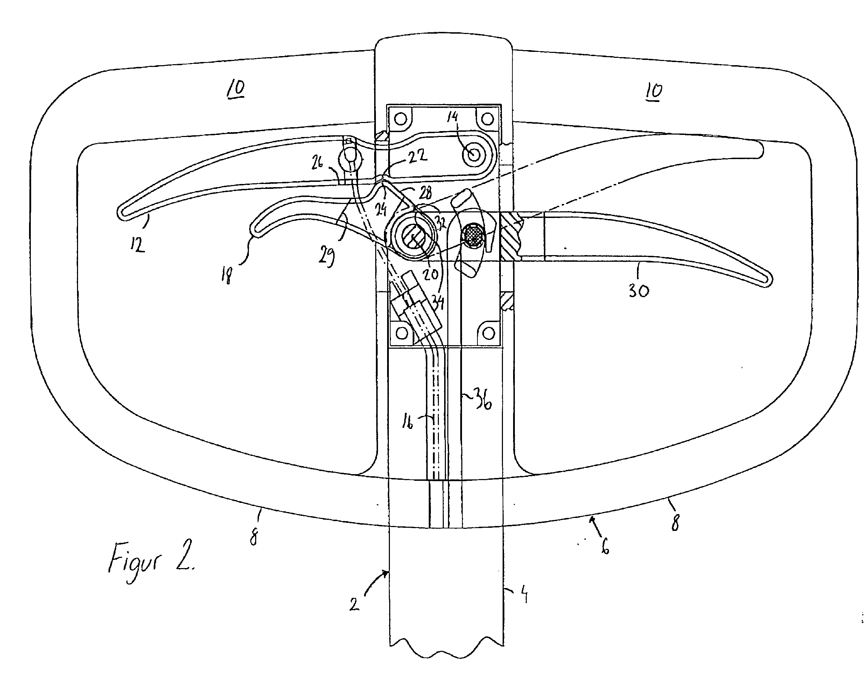

Fig 1 shows a handle for a hand truck with a brake arrangement in accordance with the invention in rest position and fig 2 shows a hand truck handle with the brake arrangement activated.

### Description of an embodiment

Fig 1 shows a tiller head 2 of a hand truck including a tiller 4 and a handle 6. With handle is here not only meant the gripping areas themselves but the entire upper part of the tiller. The handle 6 thus includes supports 8 and grips 10 at the end of the tiller 2. In the handle 6 a brake actuator in the shape of a first lever 12 is arranged. The lever 12 is pivotally journalled on a first axle 14. A cable 16 or the like is fastened to the lever 12 for the influencing of not shown brake means in a manner known per se. Preferably the cable 16 is connected to a pair of brake shoes that on activation are pressed against a wheel. The brake shoes are spring biased towards a release position giving the lever 12 the position shown in fig 1.

The above described embodiment is essentially known and used on hand trucks. The solution according to the invention further includes an additional second lever 18 pivotally journalled in the handle 6 on a second axle 20 that is essentially parallel to the first axle 14. The cable 16 runs through a passage 29 in the second lever 18. The second lever 18 is used at parking brake locking in a way that is described in detail below.

In the handle 6 a third lever 30 is further pivotally journalled on a third axle that in the shown embodiment coincide with the second axle 20. It is possible with an embodiment with two separate axles, but this will be difficult to achieve with regard to the available space and at the same time the number of parts increase. The third lever 30 acts on a pull rod 36 that in turn acts on a lowering valve (not shown) for the load carrier of the hand truck, normally load forks, in a manner known per se.

The invention is thus focused on the presence of the second lever 18 that is used to lock the first lever 12 in the braking position in order to achieve a parking brake function that is described below.

In fig 1 the first and second levers 12, 18 are shown in their respective releasing positions influenced by not shown spring means. When the operator wish to brake the truck he will in the normal manner pull the first lever 12 towards the grip part 10 at which the spring force is overcome and the brake is activated. When the operator then releases the lever 12 the brake is released.

When the operator wish to activate the parking brake this is achieved by pulling the second lever 18 towards the breaking position shown in fig 2. This will also automatically bring the first lever 12 to its breaking position. The second lever 18 includes a locking part 24 in the shape of o a protrusion that in the braking position cooperates with a corresponding locking part 22 of the first lever in the shape of a cooperating recess. The friction force between the cooperating locking parts 22, 24 thereby overcomes the spring pretension and the levers 12, 18 retain the breaking position shown in fig 2 even after being released by the operator and a parking brake function is achieved.

The parking brake may then be released by depressing the second lever 18 with a finger towards the position shown in fig 1 so that the locking is released and the levers returned to the brake release position.

An alternative release procedure also exist. The third lever 30 includes an actuation part 34 that cooperates with an actuation part 32 of the second lever 18 so that this is influenced towards its release position when the third lever 30 is pulled towards the grip part 10 (dashed position in fig 2.) This means in the shown embodiment also that the pull rod 36 actuates the lowering valve so that it opens. In other words the lowering of a pallet automatically releases the parking brake if this is active.

The first and second levers 12, 18 are preferably provided with cooperating contact surfaces 26, 28 that are in contact with each other in the released position. This provides in addition to a good function also an aesthetically appealing shape. Furthermore the space in the upper part of the tiller arm where the levers 12, 18, 30 are fastened is preferably covered by a cover or panel that for the sake of clarity has been left out of the figures.

The invention can within the frame of the patent claims be executed in accordance with a number of alternative embodiments other than the ones described above. Thus one can for instance vary the shape and location of the levers and their cooperating parts.

## Claims

1. A tiller (4) of a handtruck or the like, the tiller (4) comprising a handle (6) with a grip (10) and a first brake actuation lever (12) pivotally journalled on a first axle (14) in the handle (6), said first lever (12) being via a wire (16) or the like connected to a brake means, a movement of the first lever (12) influence the brake means between a braking and a released position, the first lever (12) is by a spring means biased towards a release position, **characterized in that** a second brake actuation lever (18) is pivotally journalled in the handle (6) on a second axle (20) essentially parallel to the first axle (14), that the levers (12, 18) include cooperating contact surfaces (26, 28) that are in contact with each other in the released position of the levers (12, 18) such that a pulling of said second lever (18) toward the grip (10) is also bringing the first lever to its braking position, said second lever (18) is moveable between the braking and the release positions, the first and second levers (12, 18) include respective mechanical locking parts (22, 24) arranged to cooperate with each other so that the locking parts (22, 24) are free from each other in the release position of the second lever (18), while the locking parts (22, 24) cooperates when the first and second levers (12, 18) are in said braking position, in such a way that the spring force of the spring means is overcome and the first lever (12) is locked in its braking position, and a pushing away from the grip (10) of the second lever will release the brake.

2. Arrangement according to claim 1, **characterized in that** the distance between the first axle (14) and the locking part (22) of the first lever is greater than the distance between the second axle (20) and the locking part (24) of the second lever.

3. Arrangement according to claim 1 or 2, **characterized in that** the locking part (24) of the second lever is constituted of a protrusion and the locking part (22) of the first lever is constituted of a recess cooperating with the protrusion (24).

4. Arrangement according to any of the claims 1 to 3, **characterized in that** the wire (16) runs through an opening (29) in the second lever (18).

5. Arrangement according to any of the claims 1 to 4, **characterized in that** a third lever (30) is journalled in the handle (6) on a third axle (20) essentially parallel with the first and second axles (14, 20), which third lever (30) includes an actuation part (34) arranged to cooperate with an actuation part (32) of the second lever (18) so that the two locking parts (22, 24) are brought out of cooperation by the actuation of the third lever (30) and the first and second levers (12, 18) resume their respective release positions by the influence of the spring means.

6. Arrangement according to claim 5, **characterized in that** the second and third axle (20) coincide.

7. Arrangement according to any of the claims 5 or 6, **characterized in that** the third lever (30) also constitutes actuation means for the control of a lowering valve for the load carrier of the hand truck.

## Patentansprüche

1. Arm (4) eines Hubwagens oder dergleichen, wobei der Arm (4) einen Griff (6) mit einem Griffteil (10) und einem ersten Bremsbetätigungshebel (12) umfasst, der schwenkbar an einer ersten Achse (14) im Griff (6) gelagert ist, wobei der erste Hebel (12) über einen Draht (16) oder dergleichen mit einer Bremseinrichtung verbunden ist, wobei eine Bewegung des ersten Hebels (12) die Bremseinrichtung zwischen einer Bremsposition und einer gelösten Position beeinflusst, wobei der erste Hebel (12) durch eine Federeinrichtung zu einer Löseposition hin vorgespannt ist, **dadurch gekennzeichnet, dass** ein zweiter Bremsbetätigungshebel (18) schwenkbar im Griff (6) an einer zweiten Achse (20) gelagert ist, die im Wesentlichen parallel zur ersten Achse (14) liegt, dass die Hebel (12, 18) zusammenwirkende Kontaktflächen (26, 28) aufweisen, die in der gelösten Position der Hebel (12, 18) so in Kontakt miteinander sind, dass ein Ziehen des zweiten Hebels (18) in Richtung zum Griffteil (10) auch den ersten Hebel in seine Bremsposition bringt, wobei der zweite Hebel (18) zwischen der Brems- und Löseposition bewegbar ist, der erste und zweite Hebel (12, 18) jeweilige mechanische Arretierungsteile (22, 24) umfassen, die angeordnet sind, um miteinander so zusammenzuwirken, dass die Arretierungsteile (22, 24) in der Löseposition des zweiten Hebels (18) voneinander freikommen, während die Arretierungsteile (22, 24), wenn der erste und zweite Hebel (12, 18) in der Bremsposition sind, in so einer Weise zusammenwirken, dass die Federkraft der Federeinrichtung überwunden und der erste Hebel (12) in seiner Bremsposition arretiert wird, und ein vom Griffteil (10) weg gerichtetes Drücken des zweiten Hebels die Bremse löst.

2. Anordnung nach Anspruch 1, **dadurch gekennzeichnet, dass** der Abstand zwischen der ersten Achse (14) und dem Arretierungsteil (22) des ersten Hebels größer als der Abstand zwischen der zweiten Achse (20) und dem Arretierungsteil (24) des zweiten Hebels ist.

3. Anordnung nach Anspruch 1 oder 2, **dadurch gekennzeichnet, dass** das Arretierungsteil (24) des zweiten Hebels aus einem Vorsprung besteht und das Arretierungsteil (22) des ersten Hebels aus einer Ausnehmung besteht, die mit dem Vorsprung (24) zusammenwirkt.

4. Anordnung nach einem der Ansprüche 1 bis 3, **dadurch gekennzeichnet, dass** der Draht (16) durch eine Öffnung (29) im zweiten Hebel (18) läuft.

5. Anordnung nach einem der Ansprüche 1 bis 4, **dadurch gekennzeichnet, dass** ein dritter Hebel (30) im Griff (6) an einer dritten Achse (20) gelagert ist, die im Wesentlichen parallel zur ersten und zweiten Achse (14, 20) liegt, welcher dritte Hebel (30) ein Betätigungsteil (34) umfasst, das angeordnet ist, um mit einem Betätigungsteil (32) des zweiten Hebels (18) so zusammenzuwirken, dass die beiden Arretierungsteile (22, 24) durch Betätigung des dritten Hebels (30) ihr Zusammenwirken beenden und der erste und zweite Hebel (12, 18) durch den Einfluss der Federeinrichtung ihre jeweiligen Lösepositionen einnehmen.

6. Anordnung nach Anspruch 5, **dadurch gekennzeichnet, dass** die zweite und dritte Achse (20) übereinstimmen.

7. Anordnung nach einem der Ansprüche 5 oder 6, **dadurch gekennzeichnet, dass** der dritte Hebel (30) auch eine Betätigungseinrichtung zur Steuerung eines Absenkventils für den Lastträger des Hubwagens bildet.

## Revendications

1. Timon (4) d'une charrette à bras ou analogue, le timon (4) comprenant une poignée (6) avec un manche (10) et un premier levier d'actionnement de frein (12), monté à pivotement sur un premier axe (14) dans la poignée (6), ledit premier levier (12) étant relié, via un câble (16) ou analogue, à des moyens de freinage, un déplacement du premier levier (12) provoquant l'actionnement des moyens de freinage, entre un position de freinage et une position relâchée, le premier levier (12) étant sollicité, par des moyens élastiques, vers une position relâchée, **caractérisé en ce qu'**un deuxième levier d'actionnement de frein (18) est monté à pivotement dans la poignée (6), sur un deuxième axe (20) sensiblement parallèle au premier axe (14), **en ce que** les leviers (12, 18) comprennent des surfaces de contact (26, 28) coopérant, mises en contact entre elles lorsque les leviers (12, 18) sont dans la position relâchée, de sorte qu'une traction dudit deuxième levier (18) vers le manche (10) place également le premier levier dans sa position de freinage, ledit deuxième levier (18) est déplaçable entre les positions de freinage et relâchée, les premier et deuxième levier (12, 18) comprennent des pièces de verrouillage mécanique (22, 24) respectives, agencées pour coopérer entre elles de manière que les pièces de verrouillage (22, 24) soient libres entre elles lorsque le deuxième levier (18) est dans la position relâchée, tandis que les pièces de verrouillage (22, 24) coopèrent lorsque les premier et deuxième levier (12, 18) sont placés dans ladite position de freinage, de manière que la force élastique des moyens élastiques soit surmontée et le premier levier (12) est verrouillé dans sa position de freinage, et une poussée à distance du manche (10), exercée sur le deuxième levier, va entraîner le relâchement du frein.

2. Agencement selon la revendication 1, **caractérisé en ce que** la distance, entre le premier axe (14) et la pièce de verrouillage (22) du premier levier, est supérieure à la distance entre le deuxième axe (20) et la pièce de verrouillage (24) du deuxième levier.

3. Agencement selon la revendication 1 ou 2, **caractérisé en ce que** la pièce de verrouillage (24) du deuxième levier est constituée d'une saillie et la pièce de verrouillage (22) du premier levier est constituée par une cavité, coopérant avec la saillie (24).

4. Agencement selon l'une quelconque des revendications 1 à 3, **caractérisé en ce que** le câble (16) passe à travers une ouverture (29) ménagée dans le deuxième levier (18).

5. Agencement selon l'une quelconque des revendications 1 à 4, **caractérisé en ce qu'**un troisième levier (30) est monté à pivotement dans la poignée (6), sur un troisième axe (20) sensiblement parallèle aux premier et deuxième axes (14, 20), ledit troisième levier (30) comprenant une pièce d'actionnement (34), agencée pour coopérer avec une pièce d'actionnement (32) du deuxième levier (18), de sorte que les deux pièces de verrouillage (22, 24) soient placées hors de coopération par l'actionnement du troisième levier (30), et les premier et deuxième levier (12, 18) reprennent leurs positions de relâchement respectives, sous l'influence des moyens élastiques.

6. Agencement selon la revendication 5, **caractérisé en ce que** les deuxième et troisième axe (20) coïncident.

7. Agencement selon l'une quelconque des revendications 5 ou 6, **caractérisé en ce que** le troisième levier (30) constitue également des moyens d'actionnement, pour la commande d'une soupape d'abaissement du support de charge de la charrette.
